# EUROPEAN PATENT APPLICATION

(11) **EP 3 255 835 A1**
(43) Date of publication of application: **13.12.2017**
(21) Application number: 15892866.3
(22) Date of filing: 25.05.2015
(51) Int. Cl.: H04L 12/24

(54) **MESSAGE TRANSMISSION METHOD, DEVICE AND SYSTEM**

(71) Applicant: Huawei Technologies Co., Ltd., Longgang District Shenzhen, Guangdong 518129 (CN)
(72) Inventor: ZHAO, Dianbo, Shenzhen Guangdong 518129 (CN); PENG, Guikai, Shenzhen Guangdong 518129 (CN); YE, Fei, Shenzhen Guangdong 518129 (CN); TANG, Dajiang, Shenzhen Guangdong 518129 (CN)
(74) Representative: Gill Jennings & Every LLP
(86) International application number: PCT/CN2015/079722
(87) International publication number: WO 2016/187785

(57) **Abstract**

The present invention discloses a message transmission method, an apparatus, and a system. The method includes: obtaining physical layer operation, administration and maintenance information between an optical line terminal and an optical network unit; fragmenting the physical layer operation, administration and maintenance information, to obtain multiple fragments; generating a first message, where the first message includes: a first message type identifier field, used to identify a type of the first message; a message length field, used to identify a length of a fragment carried in the first message; an action indication field, used to identify whether the fragment carried in the first message is the last fragment; a first fragment sequence number field, used to identify a sequence number of the fragment carried in the first message; and a message content field, used to carry a fragment in the multiple fragments; and sending the first message. According to embodiments of the present invention, an OLT in an OFDM PON system transmits physical layer operation, administration and maintenance information to an ONU.

## Description

### TECHNICAL FIELD

The present invention relates to the communications field, and in particular, to a message transmission method, an apparatus, and a system.

### BACKGROUND

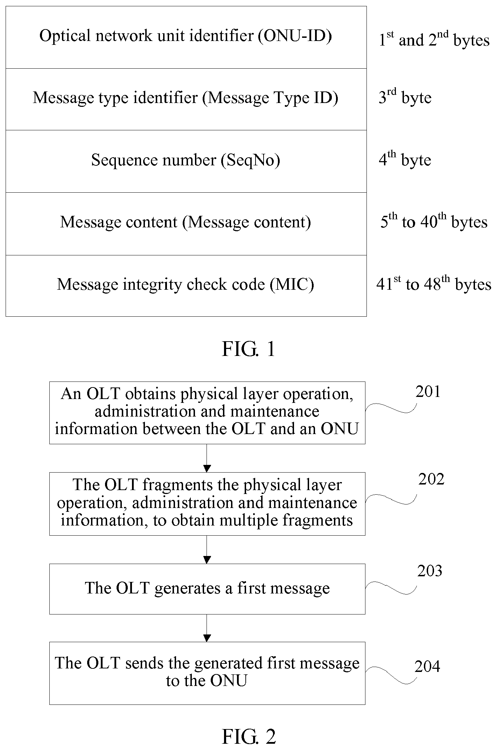

An existing passive optical network (Passive Optical Network, PON) includes three parts: an OLT (Optical Line Terminal, optical line terminal), an ODN (Optical Distribution Network, optical distribution network), and an ONU (Optical Network Unit, optical network unit). The OLT transmits physical layer operation, administration and maintenance information by using a physical layer operation, administration and maintenance (Physical Layer Operation, Administration and Maintenance, PLOAM) message, to manage the ONU. Specifically, the PLOAM message may include administration and maintenance information such as ONU activation, setup of an ONU management and control channel, encryption configuration, and key management. Specifically, the PLOAM message fixedly has 13 bytes or 48 bytes. Using an example in which the PLOAM message fixedly has 48 bytes, a structure of the PLOAM message is shown in FIG. 1.

As shown in FIG. 1, 1^{st} and 2^{nd} bytes of an existing PLOAM message are an optical network unit identifier (ONU-ID) field, and are used to identify an ONU-ID of an optical network unit receiving the PLOAM message. Each ONU obtains a number, that is, an ONU-ID, at a registration and activation stage, and a value range of the number is from 0 to 1022. ONU-ID=0x3FF is broadcast to all ONUs. A 3^{rd} byte is a message type identifier (Message Type ID) field, and is used to identify a type of the PLOAM message. For specific content, refer to ITU-T G.987.3. A 4^{th} byte is a sequence number (SeqNo) field, and is used to ensure reliable transmission of the PLOAM message. When an uplink PLOAM message responds to a request of a downlink PLOAM message, SeqNos of the two messages are required to be the same. 5^{th} to 40^{th} bytes are a message content (Message content) field, and are used to carry a payload of the PLOAM message. 41^{st} to 48^{th} bytes are a message integrity check code (MIC) field. After receiving the PLOAM message, the optical network unit performs integrity check. When a MIC is incorrect, the optical network unit discards the PLOAM message.

An orthogonal frequency division multiplexing passive optical network (Orthogonal Frequency Division Multiplexing Passive Optical Network, OFDM PON) is an architecture of a PON system. An orthogonal frequency division multiplexing (Orthogonal Frequency Division Multiplexing, OFDM) technology is used, and a bandwidth resource is divided into a two-dimensional multiplexing mode of a timeslot and a subcarrier. Therefore, compared with a conventional time division multiplexing PON system that only uses a timeslot as a one-dimensional scheduling resource, the OFDM PON greatly improves an allocation granularity of the bandwidth resource of the system.

Because the OFDM PON supports the OFDM technology, the OFDM PON can support multi-order quadrature amplitude modulation (Quadrature Amplitude Modulation, QAM), for example, QPSK (Quadrature Phase Shift Keying, quadrature phase shift keying), 64QAM, or 256QAM, on multiple subcarriers. In addition, at an online registration stage and an operation stage of an OFDM-PON system, an OLT needs to deliver, to an ONU, OFDM-related large-scale physical configuration parameters, for example, parameters such as a subcarrier type table, a modulation order table, a pre-equalization coefficient table, an ONU-ID, and an equalization delay. An existing PLOAM message has a message structure fixedly having 13 or 48 bytes, but the OFDM-related large-scale physical configuration parameters that need to be transmitted in the OFDM PON already far exceeds the fixed 13 or 48 bytes of the existing PLOAM message. Consequently, administration and maintenance information such as a physical configuration cannot be transmitted by using the existing PLOAM message in the OFDM PON. For example, the OFDM PON supports 256 subcarriers, and a pre-equalization coefficient of each subcarrier needs to be carried by using 4 bytes. Therefore, a size of a pre-equalization coefficient table is at least 4*256=1024 bytes, and is far greater than the 13 bytes or the 48 bytes of the existing PLOAM message.

### SUMMARY

Embodiments of the present invention provide a message transmission method, an apparatus, and a system, so as to transmit physical layer operation, administration and maintenance information to an ONU by an OLT in an OFDM PON system.

According to a first aspect, a message transmission method is provided, including:
obtaining physical layer operation, administration and maintenance information between an optical line terminal and an optical network unit;
fragmenting the physical layer operation, administration and maintenance information, to obtain multiple fragments;
generating a first message, where the first message includes: a first message type identifier field, used to identify a type of the first message; a message length field, used to identify a length of a fragment carried in the first message; an action indication field, used to identify whether the fragment carried in the first message is the last fragment; a first fragment sequence number field, used to identify a sequence number of the fragment carried in the first message; and a message content field, used to carry a fragment in the multiple fragments; and
sending the first message.

With reference to the first aspect of the embodiments of the present invention, in a first possible implementation of the first aspect of the embodiments of the present invention,
the action indication field is further used to identify whether to request the optical network unit to return a second message.

With reference to the first possible implementation of the first aspect of the embodiments of the present invention, in a second possible implementation of the first aspect of the embodiments of the present invention, the method further includes:
when the action indication field requests the optical network unit to return a second message, receiving the second message, where the second message includes: a first message reception result indication field, used to record whether each first message is successfully received or fails to be received.

With reference to the second possible implementation of the first aspect of the embodiments of the present invention, in a third possible implementation of the first aspect of the embodiments of the present invention,
the second message further includes: a first message statistics information field, where the first message statistics information field includes: a successful first message quantity field and/or a failed first message quantity field; the successful first message quantity field is used to identify a quantity of successful first messages that is recorded in the first message reception result indication field; and the failed first message quantity field is used to identify a quantity of failed first messages that is recorded in the first message reception result indication field; and
the method further includes:
searching the successful first message quantity field, and if determining that a quantity of successful first messages reaches a value of the successful first message quantity field, re-sending all the failed first messages in the first message reception result indication field, where all the failed first messages include: all first messages whose reception failure is determined and that are found and all remaining first messages that are not found; or
searching the failed first message quantity field, and if determining that a quantity of failed first messages reaches a value of the failed first message quantity field, re-sending all the first messages whose reception failure is determined in the first message reception result indication field.

With reference to the second possible implementation of the first aspect of the embodiments of the present invention, in a fourth possible implementation of the first aspect of the embodiments of the present invention, the second message further includes: a completion code field, used to identify a processing result of reception of the first message by the optical network unit; and
the method further includes: determining, according to a value of the completion code field, that at least one first message fails to be received.

With reference to the first aspect, the first possible implementation of the first aspect, the second possible implementation of the first aspect, the third possible implementation of the first aspect, or the fourth possible implementation of the first aspect, in a fifth possible implementation of the first aspect, the first message further includes: a first sequence number field, used to identify a sequence number of the first message.

With reference to the first aspect, the first possible implementation of the first aspect, the second possible implementation of the first aspect, the third possible implementation of the first aspect, or the fourth possible implementation of the first aspect, in a sixth possible implementation of the first aspect, the first message further includes: a first optical network unit identifier field, used to identify an identifier of an optical network unit receiving the first message.

According to a second aspect, a message transmission method is provided, including:
receiving a first message, where the first message includes: a first message type identifier field, used to identify a type of the first message; a message length field, used to identify a length of a fragment carried in the first message; an action indication field, used to identify whether the fragment carried in the first message is the last fragment; a first fragment sequence number field, used to identify a sequence number of the fragment carried in the first message; and a message content field, used to carry a fragment in multiple fragments, where the fragment in the multiple fragments is a fragment in the multiple fragments that are obtained after physical layer operation, administration and maintenance information between an optical line terminal and an optical network unit is fragmented; and
when the action indication field identifies that the fragment carried in the first message is the last fragment, searching the message length field, the message type identifier field, and the fragment sequence number field, and reassembling, according to a sequence of sequence numbers of fragments that are identified in the fragment sequence number field, first messages having same types identified in the message type identifier field, to obtain the physical layer operation, administration and maintenance information between the optical line terminal and the optical network unit.

With reference to the second aspect of the embodiments of the present invention, in a first possible implementation of the first aspect of the embodiments of the present invention, the action indication field of the first message is further used to identify whether to request the optical network unit to return a second message; and
the method further includes:
when the action indication field of the received first message requests the optical network unit to return a second message, sending the second message, where the second message includes: a first message reception result indication field, used to record whether each first message is successfully received or fails to be received.

With reference to the first possible implementation of the second aspect of the embodiments of the present invention, in a second possible implementation of the first aspect of the embodiments of the present invention, the second message further includes: a first message statistics information field, where the first message statistics information field includes: a successful first message quantity field and/or a failed first message quantity field; the successful first message quantity field is used to identify a quantity of successful first messages that is recorded in the first message reception result indication field; and the failed first message quantity field is used to identify a quantity of failed first messages that is recorded in the first message reception result indication field.

With reference to the second aspect of the embodiments of the present invention, the first possible implementation of the first aspect, or the second possible implementation of the first aspect, in a third possible implementation of the first aspect of the embodiments of the present invention, the second message further includes: a completion code field, used to identify a processing result of reception of the first message by the optical network unit.

With reference to the second aspect of the embodiments of the present invention, the first possible implementation of the first aspect, or the second possible implementation of the first aspect, in a fourth possible implementation of the first aspect of the embodiments of the present invention, the second message further includes: a second fragment sequence number field, used to identify a sequence number that is replied by the second message and that is of the fragment carried in the first message.

With reference to the second aspect of the embodiments of the present invention, the first possible implementation of the first aspect, or the second possible implementation of the first aspect, in a fifth possible implementation of the first aspect of the embodiments of the present invention, the second message further includes: a second sequence number field, used to identify a sequence number of the second message.

With reference to the second aspect of the embodiments of the present invention, the first possible implementation of the first aspect, or the second possible implementation of the first aspect, in a sixth possible implementation of the first aspect of the embodiments of the present invention, the second message further includes: a second optical network unit identifier field, used to identify an identifier of an optical network unit sending the second message.

According to a third aspect, an optical line terminal is provided, including:
an obtaining unit, configured to obtain physical layer operation, administration and maintenance information between the optical line terminal and an optical network unit;
a fragmentation unit, configured to fragment the physical layer operation, administration and maintenance information, to obtain multiple fragments;
a generation unit, configured to generate a first message, where the first message includes: a first message type identifier field, used to identify a type of the first message; a message length field, used to identify a length of a fragment carried in the first message; an action indication field, used to identify whether the fragment carried in the first message is the last fragment; a first fragment sequence number field, used to identify a sequence number of the fragment carried in the first message; and a message content field, used to carry a fragment in the multiple fragments; and
a first sending unit, configured to send the first message.

With reference to the third aspect of the embodiments of the present invention, in a first possible implementation of the first aspect of the embodiments of the present invention, the action indication field is further used to identify whether to request the optical network unit to return a second message.

With reference to the third aspect of the embodiments of the present invention, the first possible implementation of the first aspect, or the second possible implementation of the first aspect, the optical line terminal further includes:
a receiving unit, configured to: when the action indication field requests the optical network unit to return a second message, receive the second message, where the second message includes: a first message reception result indication field, used to record whether each first message is successfully received or fails to be received; and
a search unit, configured to: search, according to the first message reception result indication field, for a failed first message, and instruct the first sending unit to re-send the failed first message, where
the first sending unit re-sends the failed first message.

With reference to the third aspect of the embodiments of the present invention, the first possible implementation of the first aspect, or the second possible implementation of the first aspect, in a third possible implementation of the first aspect of the embodiments of the present invention, the second message further includes: a first message statistics information field, where the first message statistics information field includes: a successful first message quantity field and/or a failed first message quantity field; the successful first message quantity field is used to identify a quantity of successful first messages that is recorded in the first message reception result indication field; and the failed first message quantity field is used to identify a quantity of failed first messages that is recorded in the first message reception result indication field;
the search unit is further configured to: search the successful first message quantity field, and if it is determined that a quantity of successful first messages reaches a value of the successful first message quantity field, instruct the first sending unit to re-send all the failed first messages in the first message reception result indication field, where all the failed first messages include: all first messages whose reception failure is determined and that are found and all remaining first messages that are not found; or search the failed first message quantity field, and if it is determined that a quantity of failed first messages reaches a value of the failed first message quantity field, instruct the first sending unit to re-send all the first messages whose reception failure is determined in the first message reception result indication field; and
the first sending unit is configured to re-send all the failed first messages in the first message reception result indication field.

With reference to the third aspect of the embodiments of the present invention, the first possible implementation of the first aspect, or the second possible implementation of the first aspect, in a fourth possible implementation of the first aspect of the embodiments of the present invention, the second message further includes: a completion code field, used to identify a processing result of reception of the first message by the optical network unit; and
the optical line terminal further includes:
a determining unit, configured to determine, according to a value of the completion code field, that at least one first message fails to be received.

With reference to the third aspect of the embodiments of the present invention, the first possible implementation of the first aspect, or the second possible implementation of the first aspect, in a fifth possible implementation of the first aspect of the embodiments of the present invention, the first message further includes: a first sequence number field, used to identify a sequence number of the first message.

With reference to the third aspect of the embodiments of the present invention, the first possible implementation of the first aspect, or the second possible implementation of the first aspect, in a sixth possible implementation of the first aspect of the embodiments of the present invention, the first message further includes: a first optical network unit identifier field, used to identify an identifier of an optical network unit receiving the first message.

According to a fourth aspect, an optical network unit is provided, including:
a second receiving unit, configured to receive a first message, where the first message includes: a first message type identifier field, used to identify a type of the first message; a message length field, used to identify a length of a fragment carried in the first message; an action indication field, used to identify whether the fragment carried in the first message is the last fragment; a first fragment sequence number field, used to identify a sequence number of the fragment carried in the first message; and a message content field, used to carry a fragment in multiple fragments, where the fragment in the multiple fragments is a fragment in the multiple fragments that are obtained after physical layer operation, administration and maintenance information between an optical line terminal and the optical network unit is fragmented; and
a reassembly unit, configured to: when the action indication field identifies that the fragment carried in the first message is the last fragment, search the message length field, the message type identifier field, and the fragment sequence number field, and reassemble, according to a sequence of sequence numbers of fragments that are identified in the fragment sequence number field, first messages having same types identified in the message type identifier field, to obtain the physical layer operation, administration and maintenance information between the optical line terminal and the optical network unit.

With reference to the fourth aspect of the embodiments of the present invention, in a first possible implementation of the first aspect of the embodiments of the present invention, the optical network unit further includes:
a second sending unit, configured to send a second message, where the second message includes: a first message reception result indication field, used to record whether each first message is successfully received or fails to be received.

With reference to the first possible implementation of the fourth aspect of the embodiments of the present invention, in a second possible implementation of the fourth aspect of the embodiments of the present invention, the second message further includes: a first message statistics information field, where the first message statistics information field includes: a successful first message quantity field and/or a failed first message quantity field; the successful first message quantity field is used to identify a quantity of successful first messages that is recorded in the first message reception result indication field; and the failed first message quantity field is used to identify a quantity of failed first messages that is recorded in the first message reception result indication field.

With reference to the fourth aspect of the embodiments of the present invention, the first possible implementation of the first aspect, or the second possible implementation of the first aspect, in a third possible implementation of the first aspect of the embodiments of the present invention, the second message further includes: a completion code field, used to identify a processing result of reception of the first message by the optical network unit.

With reference to the fourth aspect of the embodiments of the present invention, the first possible implementation of the first aspect, or the second possible implementation of the first aspect, in a fourth possible implementation of the first aspect of the embodiments of the present invention, the second message further includes: a second fragment sequence number field, used to identify a sequence number that is replied by the second message and that is of the fragment carried in the first message.

With reference to the fourth aspect of the embodiments of the present invention, the first possible implementation of the first aspect, or the second possible implementation of the first aspect, in a fifth possible implementation of the first aspect of the embodiments of the present invention, the second message further includes: a second sequence number field, used to identify a sequence number of the second message.

With reference to the fourth aspect of the embodiments of the present invention, the first possible implementation of the first aspect, or the second possible implementation of the first aspect, in a sixth possible implementation of the first aspect of the embodiments of the present invention, the second message further includes: a second optical network unit identifier field, used to identify an identifier of an optical network unit sending the second message.

According to a fifth aspect, a passive optical network system is provided, including the optical line terminal and the optical network unit.

Based on the foregoing technical solutions, in the embodiments of the present invention, an OLT obtains physical layer operation, administration and maintenance information between the optical line terminal and an optical network unit; the OLT fragments the physical layer operation, administration and maintenance information, to obtain multiple fragments; the OLT generates a first message, where the first message includes: a first message type identifier field, used to identify a type of the first message; a message length field, used to identify a length of a fragment carried in the first message; an action indication field, used to identify whether the fragment carried in the first message is the last fragment; a first fragment sequence number field, used to identify a sequence number of the fragment carried in the first message; and a message content field, used to carry a fragment in the multiple fragments; and the OLT sends the first message to the ONU. When the action indication field identifies that the fragment carried in the first message is the last fragment, the ONU searches the message length field, the message type identifier field, and the fragment sequence number field, and the ONU reassembles, according to a sequence of sequence numbers of fragments that are identified in the fragment sequence number field, first messages having same types identified in the message type identifier field, to obtain the physical layer operation, administration and maintenance information between the optical line terminal and the optical network unit. According to the embodiments of the present invention, an OLT in an OFDM PON system transmits physical layer operation, administration and maintenance information to an ONU.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic structural diagram of an existing PLOAM message;
FIG. 2 is a flowchart of a message transmission method according to an embodiment of the present invention;
FIG. 3 is a schematic structural diagram of frames of a first message according to an embodiment of the present invention;
FIG. 4 is a flowchart of a message transmission method according to an embodiment of the present invention;
FIG. 5 is a flowchart of a message transmission method according to an embodiment of the present invention;
FIG. 6 is a flowchart of a message transmission method according to an embodiment of the present invention;
FIG. 7 is a flowchart of a message transmission method according to an embodiment of the present invention;
FIG. 8 is a schematic structural diagram of frames of a first message according to an embodiment of the present invention;
FIG. 9 is a schematic structural diagram of frames of a second message according to an embodiment of the present invention;
FIG. 10 is a schematic block diagram of an optical line terminal according to an embodiment of the present invention;
FIG. 11 is a schematic block diagram of an optical line terminal according to an embodiment of the present invention;
FIG. 12 is a schematic block diagram of an optical network unit according to an embodiment of the present invention;
FIG. 13 is a schematic block diagram of an optical network unit according to an embodiment of the present invention;
FIG. 14 is a schematic block diagram of an OFDM-PON system according to an embodiment of the present invention;
FIG. 15 is a schematic block diagram of a data communication apparatus according to an embodiment of the present invention; and
FIG. 16 is a schematic block diagram of a data communication apparatus according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

### Embodiment 1

As shown in FIG. 2, this embodiment of the present invention discloses a message transmission method, including the following steps.
Step 201: An OLT obtains physical layer operation, administration and maintenance information between the OLT and an ONU.
   In this embodiment, the physical layer operation, administration and maintenance information may be physical layer operation, administration and maintenance related information. The physical layer operation, administration and maintenance information is mainly administration information and maintenance information, for example, information such as configuration information, ONU activation information, ONU registration information, encryption key update, or power management, of a physical layer between the OLT and the ONU.
Step 202: The OLT fragments the physical layer operation, administration and maintenance information, to obtain multiple fragments.
Step 203: The OLT generates a first message.

The generated first message includes at least the following fields: a first message type identifier (Message type ID) field, used to identify a type of the first message, where for the type of the first message, refer to 19 downlink PLOAM messages and nine uplink PLOAM messages that are specified in the existing GPON standard protocol ITU-T G.984.3 and respectively used for ONU registration, ONU-ID allocation, ranging, data encryption, status monitoring, password authentication, bit error rate monitoring, and the like; a message length (Length) field, used to identify a length of a fragment carried in the first message; an action indication field, used to identify whether the fragment carried in the first message is the last fragment; a first fragment sequence number (Fragment SeqNo) field, used to identify a sequence number of the fragment carried in the first message; and a message content (Message Content) field, used to carry a fragment in the multiple fragments.

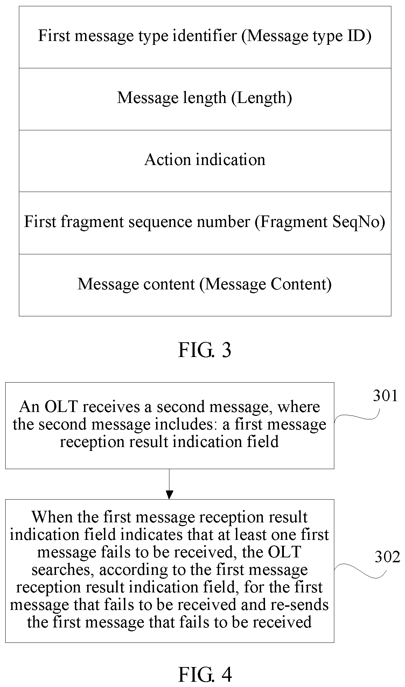

Specifically, a message format of the first message is shown in the following Table 1 and FIG. 3:

**Table 1**

| Content | Description |
|---|---|
| First message type identifier (Message type ID) | Used to identify a type of a first message |
| Message length (Length) | Used to identify a length of a fragment carried in the first message |
| Action indication | 1-the last fragment 0-others |
| First fragment sequence number (Fragment SeqNo) | Used to identify a sequence number of the fragment carried in the first message |
| Message content (Message Content) | Used to carry a fragment in the multiple fragments |

It should be noted that the action indication may identify the last fragment by using "0" (or any other identifier), and identify, by using "1" (or any other different identifier), a fragment that is not the last fragment.

Step 204: The OLT sends the generated first message to the ONU.

Optionally, the first message generated by the OLT further includes other fields, for example, a first sequence number field, used to identify a sequence number of the first message; a first optical network unit identifier field, used to identify an identifier of an optical network unit receiving the first message; and a first message integrity check code field, used to perform message integrity check on the first message by the optical network unit.

In this embodiment of the present invention, an OLT fragments physical layer operation, administration and maintenance information, then generates first messages for fragments, and sends the first messages to an ONU. After receiving the first messages, the ONU reassembles the fragments to obtain the physical layer operation, administration and maintenance information.

### Embodiment 2

After the OLT generates the first message according to Embodiment 1, and sends the first message to the ONU, the ONU may not receive the first message sent by the OLT, that is, the first message is lost, due to a line fault between the OLT and the ONU or the like. In the case of a loss, the lost first message needs to be further processed, for example, to be retransmitted. Therefore, a retransmission mechanism needs to be set up. A retransmission process is specifically described below. The action indication field of the first message may be further used to identify whether to request the ONU to return a second message. After receiving the first message carrying the action indication field, the ONU determines that a second message needs to be replied, and replies the second message to the OLT.

When the ONU determines to return the second message to the OLT, the method further includes a message transmission method shown in FIG. 4. Specifically, as shown in FIG. 4, the method includes the following steps.

Step 301: The OLT receives the second message.

The second message includes: a first message reception result indication field, used to record whether each first message is successfully received or fails to be received.

Step 302: When a first message reception result indication field indicates that at least one first message fails to be received, the OLT searches for the failed first message and re-sends the failed first message.

It should be noted that the second message further includes: a completion code field, used to identify a processing result of reception of the first message by the optical network unit. For example, 0 represents that the reception is completed, 1 represents that there is no corresponding message, 2 represents that the optical network unit is busy and a message waits to be processed, 3 represents an unknown message type, 4 represents that a parameter delivered by the OLT is incorrect, 5 represents that parsing is faulty after the message is received, and 6 represents that the first message fails to be received. Another value is reserved. After step 301, the method further includes a step of determining, according to a value of the completion code field, that at least one first message fails to be received.

Further, optionally, when the message type field of the first message identifies that the second message needs to be replied, a timer may be further started. When the second message is received before the timer times out, the timer is reset, and a next first message is sent. When the timer times out and the second message is not received, the first message is re-sent. In addition, based on setting of the timer, a quantity-of-retransmissions counter may be further set. A count value of the counter increases by 1 each time the first message is re-sent. If the count value of the counter reaches a preset value, the first message stops being re-sent; otherwise, the first message continues to be re-sent.

In this embodiment of the present invention, an OLT fragments physical layer operation, administration and maintenance information, then generates first messages for fragments, and sends the first messages to an ONU. The ONU reassembles the fragments to obtain the physical layer operation, administration and maintenance information.

Further, in this embodiment of the present invention, a retransmission mechanism is set up. The ONU determines, according to the first message, whether the ONU is required to return a second message. When the first message requires the ONU to return a second message, the ONU replies the second message to the OLT. The second message carries first message reception result information. The OLT re-sends, according to the second message, all first messages whose reception failure is determined. According to this embodiment of the present invention, an OLT in an OFDM PON system transmits physical layer operation, administration and maintenance information to an ONU.

### Embodiment 3

After the OLT generates the first message according to Embodiment 1, and sends the first message to the ONU, the ONU may not receive the first message sent by the OLT, that is, the first message is lost, due to a line fault between the OLT and the ONU or the like. In the case of a loss, the lost first message needs to be further processed, for example, to be retransmitted. Therefore, a retransmission mechanism needs to be set up. A retransmission process is specifically described below. The action indication field of the first message may be further used to identify whether to request the ONU to return a second message. After receiving the first message carrying the action indication field, the ONU determines that a second message needs to be replied, and replies the second message to the OLT.

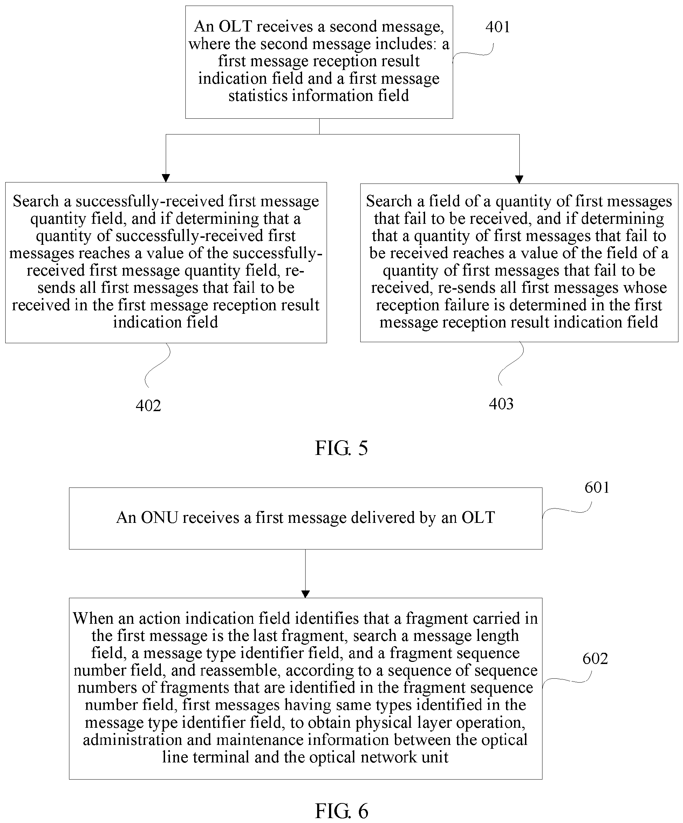

When the ONU determines to return the second message to the OLT, the method further includes a message transmission method shown in FIG. 5. Specifically, as shown in FIG. 5, the message transmission method includes the following steps.

Step 401: The OLT receives the second message.

The second message includes: a first message reception result indication field and a first message statistics information field. The first message reception result indication field is used to record whether each first message is successfully received or fails to be received. The first message statistics information field includes: a successful first message quantity field and/or a failed first message quantity field. The successful first message quantity field is used to identify a quantity of successful first messages that is recorded in the first message reception result indication field; and the failed first message quantity field is used to identify a quantity of failed first messages that is recorded in the first message reception result indication field.

Step 402: The OLT searches the successful first message quantity field, and if determining that a quantity of successful first messages reaches a value of the successful first message quantity field, re-sends all the failed first messages in a first message reception result indication field. All the failed first messages include: all first messages whose reception failure is determined and that are found and all remaining first messages that are not found.

Alternatively, step 403: The OLT searches the failed first message quantity field, and if determining that a quantity of failed first messages reaches a value of the failed first message quantity field, re-sending all the first messages whose reception failure is determined in a first message reception result indication field.

It should be noted that the second message may further include: a completion code field, used to identify a processing result of reception of the first message by the optical network unit. For example, 0 represents that the reception is completed, 1 represents that there is no corresponding message, 2 represents that the optical network unit is busy and a message waits to be processed, 3 represents an unknown message type, 4 represents that a parameter delivered by the OLT is incorrect, 5 represents that parsing is faulty after the message is received, and 6 represents that the first message fails to be received. Another value is reserved. After step 401, the method further includes a step of determining, according to a value of the completion code field, that at least one first message fails to be received.

It should be noted that in Embodiment 2 and Embodiment 3, the second message generated by the ONU further includes a second message integrity check code field, a second optical network unit identifier field, and a second fragment sequence number field.

After receiving the second message, the OLT further needs to perform the following steps:
Step 1: The OLT reads a value of the second message integrity check code field to determine whether the second message is correctly received; and if the second message is not correctly received, discards the second message.
Step 2: The OLT determines whether a value of the second optical network unit identifier field of the second message is equal to a value of the first optical network unit identifier field of the delivered first message; and if the value of the second optical network unit identifier field of the second message is not equal to the value of the first optical network unit identifier field of the delivered first message, discards the second message.
Step 3: The OLT determines whether a value of the second fragment sequence number field is equal to a value of the first fragment sequence number field. If the value of the second fragment sequence number field is equal to the value of the first fragment sequence number field, the OLT considers that the second message is a reply to the fragment carried in the first message; and if the value of the second fragment sequence number field is not equal to the value of the first fragment sequence number field, discards the second message.

In this embodiment of the present invention, an OLT fragments physical layer operation, administration and maintenance information, then generates first messages for fragments, and sends the first messages to an ONU. The ONU reassembles the fragments to obtain the physical layer operation, administration and maintenance information.

Further, in this embodiment of the present invention, a retransmission mechanism is set up. The ONU determines, according to the first message, whether the ONU is required to return a second message. When the first message requires the ONU to return a second message, the ONU replies the second message to the OLT. The second message carries first message reception result information. The OLT re-sends, according to the second message, all first messages whose reception failure is determined. According to this embodiment of the present invention, an OLT in an OFDM PON system transmits physical layer operation, administration and maintenance information to an ONU.

### Embodiment 4

As shown in FIG. 6, this embodiment of the present invention discloses another message transmission method, including the following steps.

Step 601: An ONU receives a first message delivered by an OLT.

The first message includes: a first message type identifier (Message type ID) field, used to identify a type of the first message; a message length (Length) field, used to identify a length of a fragment carried in the first message; an action indication field, used to identify whether the fragment carried in the first message is the last fragment; a first fragment sequence number (Fragment SeqNo) field, used to identify a sequence number of the fragment carried in the first message; and a message content (Message Content) field, used to carry a fragment in multiple fragments, where the fragment in the multiple fragments is a fragment in the multiple fragments that are obtained after physical layer operation, administration and maintenance information between the optical line terminal and the optical network unit is fragmented.

Step 602: When the action indication field identifies that the fragment carried in the first message is the last fragment, the ONU searches the message length field, the message type identifier field, and the fragment sequence number field, and reassembles, according to a sequence of sequence numbers of fragments that are identified in the fragment sequence number field, first messages having same types identified in the message type identifier field, to obtain the physical layer operation, administration and maintenance information between the optical line terminal and the optical network unit.

In this embodiment of the present invention, an OLT fragments physical layer operation, administration and maintenance information, then generates first messages for fragments, and sends the first messages to an ONU. The ONU reassembles the fragments to obtain the physical layer operation, administration and maintenance information.

Further, in this embodiment of the present invention, a retransmission mechanism is set up. The ONU determines, according to the first message, whether the ONU is required to return a second message. When the first message requires the ONU to return a second message, the ONU replies the second message to the OLT. The second message carries first message reception result information. The OLT re-sends, according to the second message, all first messages whose reception failure is determined. According to this embodiment of the present invention, an OLT in an OFDM PON system transmits physical layer operation, administration and maintenance information to an ONU.

### Embodiment 5

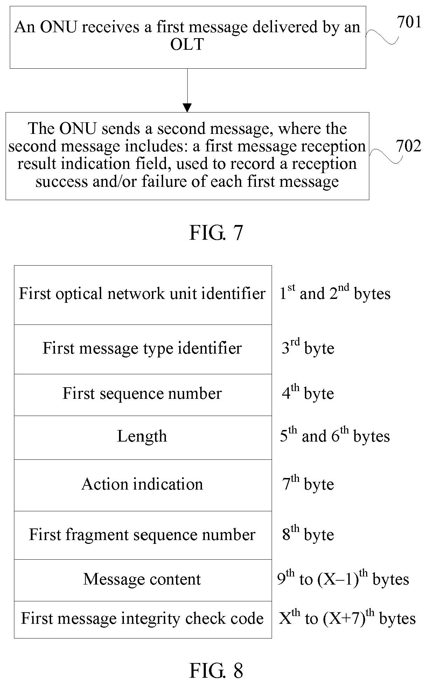

As shown in FIG. 7, an embodiment of the present invention discloses another specific message transmission method, including the following step:
Step 701: An ONU receives a first message delivered by an OLT.

The first message includes at least: a first message type identifier (Message type ID) field, used to identify a type of the first message; a message length (Length) field, used to identify a length of a fragment carried in the first message; an action indication field, used to identify whether the fragment carried in the first message is the last fragment; a first fragment sequence number (Fragment SeqNo) field, used to identify a sequence number of the fragment carried in the first message; and a message content (Message Content) field, used to carry a fragment in multiple fragments, where the fragment in the multiple fragments is a fragment in the multiple fragments that are obtained after physical layer operation, administration and maintenance information between the optical line terminal and the optical network unit is fragmented.

The action indication field of the first message is further used to identify whether to request the optical network unit to return a second message. When the action indication field of the first message received by the ONU requests the optical network unit to return a second message, the method further includes a step:
Step 702: The ONU sends a second message, where the second message includes: a first message reception result indication field, used to record whether each first message is successfully received or fails to be received.

To improve efficiency of searching for, by the OLT, a failed first message, the second message further includes: a first message statistics information field. The first message statistics information field includes: a successful first message quantity field and/or a failed first message quantity field. The successful first message quantity field is used to identify a quantity of successful first messages that is recorded in the first message reception result indication field; and the failed first message quantity field is used to identify a quantity of failed first messages that is recorded in the first message reception result indication field. The OLT searches the successful first message quantity field, and if determining that a quantity of successful first messages reaches a value of the successful first message quantity field, re-sends all the failed first messages in the first message reception result indication field. All the failed first messages include: all first messages whose reception failure is determined and that are found and all remaining first messages that are not found. Alternatively, the OLT searches the failed first message quantity field, and if determining that a quantity of failed first messages reaches a value of the failed first message quantity field, re-sends all the first messages whose reception failure is determined in the first message reception result indication field.

It should be noted that in this embodiment, the second message generated by the ONU further includes a second message integrity check code field, a second optical network unit identifier field, and a second fragment sequence number field. After receiving the second message, the OLT further performs the following steps:
Step 1: The OLT reads a value of the second message integrity check code field to determine whether the second message is correctly received; and if the second message is not correctly received, discards the second message.
Step 2: The OLT determines whether a value of the second optical network unit identifier field of the second message is equal to a value of the first optical network unit identifier field of the delivered first message; and if the value of the second optical network unit identifier field of the second message is not equal to the value of the first optical network unit identifier field of the delivered first message, discards the second message.
Step 3: The OLT determines whether a value of the second fragment sequence number field is equal to a value of the first fragment sequence number field. If the value of the second fragment sequence number field is equal to the value of the first fragment sequence number field, the OLT considers that the second message is a reply to the fragment carried in the first message; otherwise, discards the second message.

It should be noted that in Embodiment 4 and Embodiment 5, the first message delivered by the OLT further includes: a first message integrity check code field, a first optical network unit identifier field, and a first sequence number field. The first optical network unit identifier field is used to identify an identifier of an optical network unit receiving the first message. The first sequence number field is used to identify a sequence number of the first message. After receiving the first message, the ONU further performs the following steps:
Step 1: The ONU reads a value of the first message integrity check code field to determine whether the first message is correctly received; and if the first message is correctly received, the ONU further performs step 2; if the first message is not correctly received, discards the first message.
Step 2: The ONU reads a value of the first optical network unit identifier field of the first message to determine whether the first message is a first message of the ONU, and if the first message is not a first message of the ONU, discards the first message.

In this embodiment of the present invention, an OLT fragments physical layer operation, administration and maintenance information, then generates first messages for fragments, and sends the first messages to an ONU. The ONU reassembles the fragments to obtain the physical layer operation, administration and maintenance information.

Further, in this embodiment of the present invention, a retransmission mechanism is set up. The ONU determines, according to the first message, whether the ONU is required to return a second message. When the first message requires the ONU to return a second message, the ONU replies the second message to the OLT. The second message carries first message reception result information. The OLT re-sends, according to the second message, all first messages whose reception failure is determined. According to this embodiment of the present invention, an OLT in an OFDM PON system transmits physical layer operation, administration and maintenance information to an ONU.

### Embodiment 6

A structure of a first message is specifically described in the following embodiment. A specific format of the first message is shown in Table 2 and FIG. 8.

**Table 2**

| Byte | Content | Description |
|---|---|---|
| 1-2 | First optical network unit identifier (ONU-ID) | Used to identify an identifier of an optical network unit receiving a first message |
| 3 | First message type identifier (Message type ID) | Used to identify a type of the first message |
| 4 | First sequence number (SeqNo) | Used to identify a sequence number of the first message |
| 5-6 | Message length (Length) | Used to identify a length of a fragment carried in the first message |
| 7 | Action indication (A000 R000) | A: determine whether to request |
| | | 1-determine to request |
| | | 0-determine not to request |
| | | R: identifier of the last fragment |
| | | 1-the last fragment |
| | | 0-others |
| 8 | First fragment sequence number (Fragment SeqNo) | Used to identify a sequence number of the fragment carried in the first message |
| 9-X-1 | Message content (Message Content) | Used to carry a fragment in multiple fragments |
| X-X+7 | First message integrity check code (MIC) | Used to perform integrity check on the first message by the optical network unit |

Specifically, content of the fields of the first message is described as follows:
The 1^{st} and the 2^{nd} bytes of the first message are the first optical network unit identifier (ONU-ID) field, and are used to identify the identifier of the optical network unit receiving the first message. Each ONU obtains a number, that is, an ONU-ID, at a registration and activation stage, and a value range of the number is from 0 to 1022. Different ONUs use different ONU-ID identifiers. ONU-ID=0x3FF is broadcast to all ONUs.

The 3^{rd} byte of the first message is the message type identifier (Message Type ID) field, and is used to identify the type of the first message. For the message type, refer to 19 downlink PLOAM messages that are specified in the existing GPON standard protocol ITU-T G.984.3 and respectively used for ONU registration and ID allocation, ranging, data encryption, status monitoring, bit error rate monitor, and the like.

The 4^{th} byte of the first message is the sequence number (SeqNo) field, and is used to ensure reliable transmission of the first message and a second message. When an uplink second message responds to a request of a downlink first message, SeqNos of the two messages are required to be the same.

The 5^{th} and the 6^{th} bytes of the first message are the message length (Length) field, are two bytes in total, and are used to identify the length of the fragment carried in the first message. By combining a length indication field, the first message supports a length flexible and variable mechanism. A first message receiving end may obtain, by parsing the Length field, a size of the fragment carried in the first message. In a particular case, for example, when bytes occupied by message content are required to be a multiple of a value, some redundant bytes (redundant bytes) need to be filled for insufficient bytes. In this case, the message length (Length) field indicates a size of data obtained by subtracting redundant bytes from effective data of the first message.

The 7^{th} byte of the first message is an action indication field, and is used to: identify whether to request the optical network unit to return a second message and identify whether the fragment carried in the first message is the last fragment. For example, a representation manner is shown in Table 2, and includes two parts: a bit A indicates determining whether the first message needs to be replied to, and if it is determined that the first message needs to be replied to, A=1; and if it is determined that the first message does not need to be replied, A=0; a function of a bit R is to indicate whether the first message is a message of the last fragment, and if the first message is a message of the last fragment, R=1; and if the first message is not a message of the last fragment, R=0.

To support a larger message length, the first message needs to support a fragment mechanism. The 8^{th} byte of the first message is the first fragment sequence number (Fragment SeqNo) field, and achieves a function of indicating the sequence number of the fragment of the first message, to facilitate fragment reassembly.

Using an example in which the field has eight effective bits for description, the sequence number of the fragment ranges from 0 to 255. The receiving end needs to determine, according to the SeqNo field and the Fragment SeqNo field, whether a particular fragment is successfully received. For example, a first message having a SeqNo of X has Y fragments in total, and the receiving end determines reception of a fragment X/0 to a fragment X/(Y-1) according to a combination of a SeqNo and a Fragment SeqNo.

The 9^{th} to the (X-1)^{th} bytes (n bytes in total, where n=(X-1)-9) of the first message are the message content (Message content) field, and are used to carry the fragment in the multiple fragments. The fragment in the multiple fragments is a fragment in the multiple fragments that are obtained after physical layer operation, administration and maintenance information between an optical line terminal and the optical network unit is fragmented.

The X^{th} to the (X+7)^{th} bytes (eight bytes in total) of the first message are the first message integrity check code (MIC) field, and are used to perform integrity check on the first message by the optical network unit. When a MIC is incorrect, the optical network unit discards the first message.

The ONU reads a value of the first message integrity check code field to determine whether the first message is correctly received; and if the first message is not correctly received, discards the first message. Then, the ONU reads a value of the first optical network unit identifier field of the first message to determine whether the first message is a first message of the ONU, and if the first message is not a first message of the ONU, discards the first message. When the action indication field identifies that the fragment carried in the first message is the last fragment, the ONU searches the message length field, the message type identifier field, and the fragment sequence number field, and reassembles, according to a sequence of sequence numbers of fragments that are identified in the fragment sequence number field, first messages having same types identified in the message type identifier field, to obtain the physical layer operation, administration and maintenance information between the optical line terminal and the optical network unit.

In this embodiment of the present invention, an OLT fragments physical layer operation, administration and maintenance information, then generates first messages for fragments, and sends the first messages to an ONU. The ONU reassembles the fragments to obtain the physical layer operation, administration and maintenance information.

Further, in this embodiment of the present invention, a retransmission mechanism is set up. The ONU determines, according to the first message, whether the ONU is required to return a second message. When the first message requires the ONU to return a second message, the ONU replies the second message to the OLT. The second message carries first message reception result information. The OLT re-sends, according to the second message, all first messages whose reception failure is determined. According to this embodiment of the present invention, an OLT in an OFDM PON system transmits physical layer operation, administration and maintenance information to an ONU.

### Embodiment 7

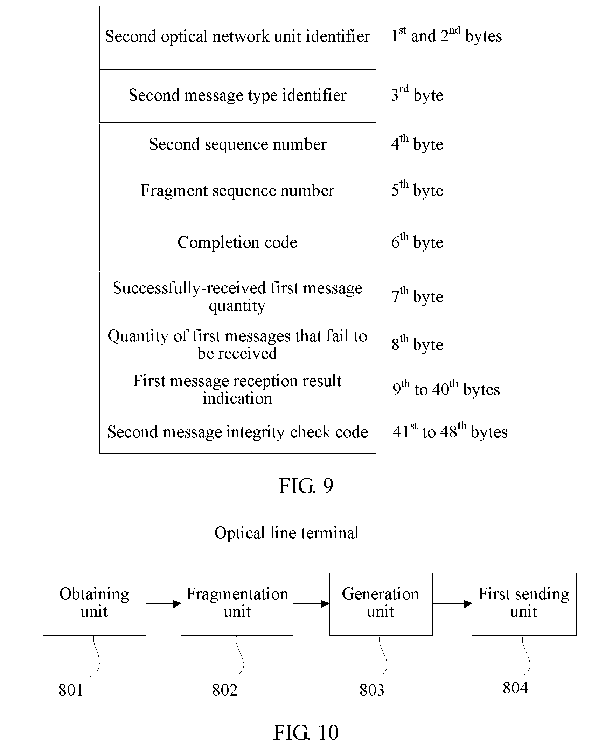

When an ONU receives a first message sent by an OLT, and determines that an action indication field of the first message requests to return a second message, the second message is generated, and a specific message format of the second message shown in Table 3. The specific format of the second message is shown in Table 3 and FIG. 9.

**Table 3**

| Byte | Content | Description |
|---|---|---|
| 1-2 | Second optical network unit identifier (ONU-ID) | Identifying an identifier of an optical network unit sending the second message |
| 3 | Second message type identifier (Message type ID) | Used to identify that a type of the second message is a confirmation message |
| 4 | Second sequence number (SeqNo) | Identifying a sequence number of the second message |
| 5 | Second fragment sequence number (Fragment SeqNo) | Identifying a sequence number that is replied by the second message and that is of a fragment carried in the first message |
| 6 | Completion code (Completion code) | Identifying a processing result of reception of the first message by the optical network unit: |
| | | 0: the reception is completed |
| | | 1: there is no corresponding message |
| | | 2: the optical network unit is busy, and a message waits to be processed |
| | | 3: unknown message type |
| | | 4: a parameter delivered by the OLT is incorrect |
| | | 5: parsing is faulty after the message is received |
| | | 6: the first message fails to be received Another value is reserved |
| 7 | Successful first message quantity (Successful fragments) | Identifying a quantity of successful first messages that is recorded in the first message reception result indication field |
| 8 | Failed first message quantity field (Failed fragments) | Identifying a quantity of failed first messages that is recorded in the first message reception result indication field |
| 9-40 | First message reception result indication (Pass/Fail bit indication for reception per fragment) | Recording whether each first message is successfully received or fails to be received |
| 41-48 | Second message integrity check code (MIC) | Used to perform integrity check on the second message by the optical line terminal |

As shown in Table 3, the 1^{st} and the 2^{nd} bytes of the second message are the second optical network unit identifier (ONU-ID) field, and are used to identify the identifier of the optical network unit sending the second message.

The 3^{rd} byte of the second message is the message type identifier (Message Type ID) field, and is used to identify the type of the second message. For the message type, refer to nine uplink PLOAM messages that are specified in the existing GPON standard protocol ITU-T G.984.3 and respectively used for ONU registration, password authentication, power failure, key management, bit error rate monitoring, and the like.

The 4^{th} byte of the second message is the sequence number (SeqNo) field, and is used to ensure reliable transmission of the first message and the second message. When an uplink second message responds to a request of a downlink first message, SeqNos of the two messages are required to be the same.

The 5^{th} byte of the second message is the second fragment sequence number (Fragment SeqNo) field, and is used to identify the sequence number that is replied by the second message and that is of the fragment carried in the first message. When an uplink second message responds to a request of a downlink first message, Fragment SeqNos of the two messages are required to be the same.

The 6^{th} byte of the second message is the completion code (Completion code) field. 0 represents that reception is completed, 1 represents that there is no corresponding message, 2 represents that the optical network unit is busy and a message waits to be processed, 3 represents an unknown message type, 4 represents that a parameter delivered by the OLT is incorrect, 5 represents that parsing is faulty after the message is received, and 6 represents that the first message fails to be received. Another value is reserved.

The 7^{th} and the 8^{th} bytes of the second message are respectively used to: identify the quantity of successful first messages that is recorded in the first message reception result indication field and identify the quantity of failed first messages that is recorded in the first message reception result indication field. For example, the ONU has learned a first message having a fragment sequence number of X, and the ONU may collect statistics on reception of first messages having sequence numbers of 0 to X (a quantity of failed fragments+a quantity of successful fragments=X+1), and reflects a statistics result in the 7^{th} and the 8^{th} bytes of the second message that is subsequently replied, to facilitate identifying failed first messages by the optical line terminal OLT quickly.

The 9^{th} to the 40^{th} bytes (32 bytes in total) of the second message indicate, by using a corresponding bit, whether each first message that is recorded by the ONU is successfully received or fails to be received. For example, a bit 1 is used to indicate that the first message is successfully received, and a bit 0 is used to indicate that the first message fails to be received. For example, the ONU receives first messages having fragment sequence numbers of 0 to 7, where MIC check on a first message of a fragment 0 fails, and bits "0111 1111" are filled in the 9^{th} byte, and 0x00 are filled in remaining 10^{th} to 40^{th} bytes. After receiving the second message, the OLT may make a corresponding response according to a corresponding completion code. If the completion code in the second message is 6, it means that the first message fails to be received. Thereafter, the OLT parses the 7^{th} and the 8^{th} bytes to determine a quantity of failed first messages, determines, by checking the 9^{th} to the 40^{th} bytes, the specific failed first messages, and further processes the failed first messages, for example, performs retransmission.

The 41^{st} to the 48^{th} bytes (eight bytes in total) of the second message are the second message integrity check code (MIC) field, and are used to perform integrity check on the second message by the OLT. When a MIC is incorrect, the OLT discards the second message.

The OLT reads a value of the second message integrity check code field to determine whether the second message is correctly received; and if the second message is not correctly received, discards the second message. The OLT determines whether a value of the second optical network unit identifier field of the second message is equal to a value of the first optical network unit identifier field of the delivered first message; and if the value of the second optical network unit identifier field of the second message is not equal to the value of the first optical network unit identifier field of the delivered first message, discards the second message. The OLT determines whether a value of the second fragment sequence number field is equal to a value of the first fragment sequence number field. If the value of the second fragment sequence number field is equal to the value of the first fragment sequence number field, the OLT considers that the second message is a reply to the fragment carried in the first message; otherwise, discards the second message. When the first message reception result indication field indicates that at least one first message fails to be received, the OLT searches for the failed first message and re-sends the failed first message.

To improve efficiency of searching for, by the OLT, a failed first message, the second message further includes: a first message statistics information field. The first message statistics information field includes: a successful first message quantity field and/or a failed first message quantity field. The successful first message quantity field is used to identify a quantity of successful first messages that is recorded in the first message reception result indication field; and the failed first message quantity field is used to identify a quantity of failed first messages that is recorded in the first message reception result indication field. The OLT searches the successful first message quantity field, and if determining that a quantity of successful first messages reaches a value of the successful first message quantity field, re-sends all the failed first messages in the first message reception result indication field. All the failed first messages include: all first messages whose reception failure is determined and that are found and all remaining first messages that are not found. Alternatively, the OLT searches the failed first message quantity field, and if determining that a quantity of failed first messages reaches a value of the failed first message quantity field, re-sends all the first messages whose reception failure is determined in the first message reception result indication field.

In this embodiment of the present invention, an OLT fragments physical layer operation, administration and maintenance information, then generates first messages for fragments, and sends the first messages to an ONU. The ONU reassembles the fragments to obtain the physical layer operation, administration and maintenance information.

Further, in this embodiment of the present invention, a retransmission mechanism is set up. The ONU determines, according to the first message, whether the ONU is required to return a second message. When the first message requires the ONU to return a second message, the ONU replies the second message to the OLT. The second message carries first message reception result information. The OLT re-sends, according to the second message, all first messages whose reception failure is determined. According to this embodiment of the present invention, an OLT in an OFDM PON system transmits physical layer operation, administration and maintenance information to an ONU.

### Embodiment 8

As shown in FIG. 10, the present invention further discloses an optical line terminal, including:
an obtaining unit 801, configured to obtain physical layer operation, administration and maintenance information between the optical line terminal and an optical network unit;
a fragmentation unit 802, configured to fragment the physical layer operation, administration and maintenance information, to obtain multiple fragments;
a generation unit 803, configured to generate a first message, where the first message includes: a first message type identifier field, used to identify a type of the first message; a message length field, used to identify a length of a fragment carried in the first message; an action indication field, used to identify whether the fragment carried in the first message is the last fragment; a first fragment sequence number field, used to identify a sequence number of the fragment carried in the first message; and a message content field, used to carry a fragment in the multiple fragments; and
a first sending unit 804, configured to send the first message.

Optionally, the first message generated by the OLT further includes other fields, for example, a first sequence number field, used to identify a sequence number of the first message; a first optical network unit identifier field, used to identify an identifier of an optical network unit receiving the first message; and a first message integrity check code field, used to perform integrity check on the first message by the optical network unit.

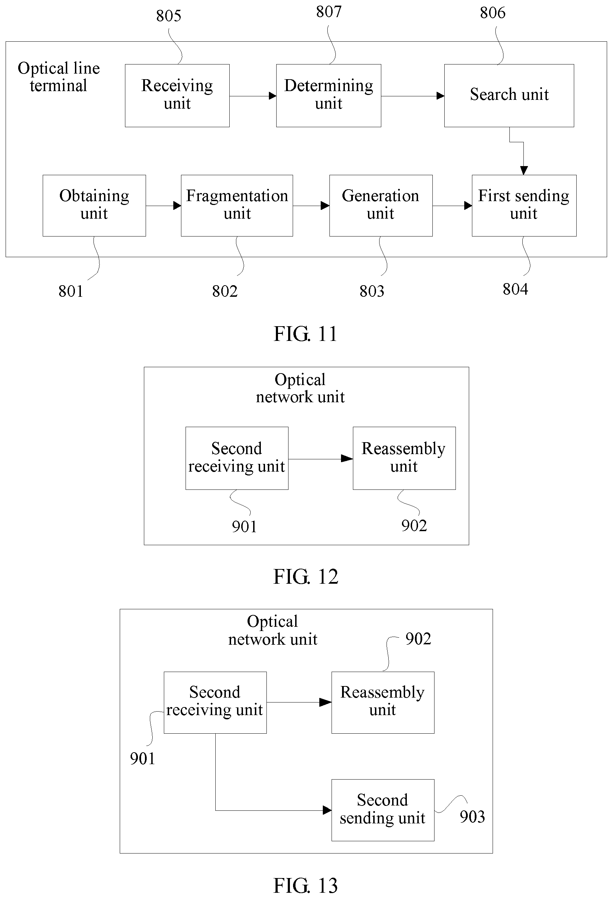

As shown in FIG. 11, the action indication field of the first message is further used to identify whether to request the optical network unit to return a second message. The optical line terminal OLT further includes:
a receiving unit 805, configured to: when the action indication field requests the optical network unit to return a second message, receive the second message, where the second message includes: a first message reception result indication field, used to record whether each first message is successfully received or fails to be received; and
a search unit 806, configured to: search, according to the first message reception result indication field, for a failed first message, and instruct the first sending unit to re-send the failed first message.

The first sending unit 804 is further configured to re-send all failed first messages in the first message reception result indication field.

Further, the second message further includes: a first message statistics information field. The first message statistics information field includes: a successful first message quantity field and/or a failed first message quantity field; the successful first message quantity field is used to identify a quantity of successful first messages that is recorded in the first message reception result indication field; and the failed first message quantity field is used to identify a quantity of failed first messages that is recorded in the first message reception result indication field.

The search unit 806 is further configured to: search the successful first message quantity field, and if it is determined that a quantity of successful first messages reaches a value of the successful first message quantity field, instruct the first sending unit to re-send all the failed first messages in the first message reception result indication field, where all the failed first messages include: all first messages whose reception failure is determined and that are found and all remaining first messages that are not found; or search the failed first message quantity field, and if it is determined that a quantity of failed first messages reaches a value of the failed first message quantity field, instruct the first sending unit to re-send all the first messages whose reception failure is determined in the first message reception result indication field. The first sending unit 804 re-sends all the first messages whose reception failure is determined in the first message reception result indication field.

The second message further includes: a completion code field, used to identify a processing result of reception of the first message by the optical network unit. The optical line terminal further includes:
a determining unit 807, configured to determine, according to a value of the completion code field, that at least one first message fails to be received.

In this embodiment of the present invention, the OLT fragments physical layer operation, administration and maintenance information, then generates first messages for fragments, and sends the first messages to an ONU. The ONU reassembles the fragments to obtain the physical layer operation, administration and maintenance information.

Further, in this embodiment of the present invention, a retransmission mechanism is set up. The ONU determines, according to the first message, whether the ONU is required to return a second message. When the first message requires the ONU to return a second message, the ONU replies the second message to the OLT. The second message carries first message reception result information. The OLT re-sends, according to the second message, all first messages whose reception failure is determined. According to this embodiment of the present invention, an OLT in an OFDM PON system transmits physical layer operation, administration and maintenance information to an ONU.

### Embodiment 9

As shown in FIG. 12, an embodiment of the present invention further discloses an optical network unit, including:
a second receiving unit 901, configured to receive a first message, where the first message includes: a first message type identifier field, used to identify a type of the first message; a message length field, used to identify a length of a fragment carried in the first message; an action indication field, used to identify whether the fragment carried in the first message is the last fragment; a first fragment sequence number field, used to identify a sequence number of the fragment carried in the first message; and a message content field, used to carry a fragment in multiple fragments, where the fragment in the multiple fragments is a fragment in the multiple fragments that are obtained after physical layer operation, administration and maintenance information between an optical line terminal and the optical network unit is fragmented; and
a reassembly unit 902, configured to: when the action indication field identifies that the fragment carried in the first message is the last fragment, search the message length field, the message type identifier field, and the fragment sequence number field, and reassemble, according to a sequence of sequence numbers of fragments that are identified in the fragment sequence number field, first messages having same types identified in the message type identifier field, to obtain the physical layer operation, administration and maintenance information between the optical line terminal and the optical network unit.

The action indication field of the first message is further used to identify whether to request the optical network unit to return a second message. When the action indication field of the received first message requests the optical network unit to return a second message, the optical network unit replies the second message.

As shown in FIG. 13, the optical network unit further includes:
a second sending unit 903, configured to send a second message, where the second message includes: a first message reception result indication field, used to record whether each first message is successfully received or fails to be received.

Further, the second message further includes: a first message statistics information field. The first message statistics information field includes: a successful first message quantity field and/or a failed first message quantity field. The successful first message quantity field is used to identify a quantity of successful first messages that is recorded in the first message reception result indication field; and the failed first message quantity field is used to identify a quantity of failed first messages that is recorded in the first message reception result indication field.

The second message further includes: a completion code field, used to identify a processing result of reception of the first message by the optical network unit. The second message further includes: a second fragment sequence number field, used to identify a sequence number that is replied by the second message and that is of the fragment carried in the first message. The second message further includes: a second sequence number field, used to identify a sequence number of the second message. The second message further includes: a second optical network unit identifier field, used to identify an identifier of an optical network unit sending the second message. In another embodiment, the second message further includes: a second message integrity check code field, used to perform integrity check on the second message by the optical line terminal. The OLT reads a value of the second message integrity check code field to determine whether the second message is correctly received; and if the second message is not correctly received, discards the second message. The OLT determines whether a value of the second optical network unit identifier field of the second message is equal to a value of the first optical network unit identifier field of the delivered first message; and if the value of the second optical network unit identifier field of the second message is not equal to the value of the first optical network unit identifier field of the delivered first message, discards the second message. The OLT determines whether a value of the second fragment sequence number field is equal to a value of the first fragment sequence number field. If the value of the second fragment sequence number field is equal to the value of the first fragment sequence number field, the OLT considers that the second message is a reply to the fragment carried in the first message; otherwise, discards the second message.

In this embodiment of the present invention, an OLT fragments physical layer operation, administration and maintenance information, then generates first messages for fragments, and sends the first messages to the ONU. The ONU reassembles the fragments to obtain the physical layer operation, administration and maintenance information.

Further, in this embodiment of the present invention, a retransmission mechanism is set up. The ONU determines, according to the first message, whether the ONU is required to return a second message. When the first message requires the ONU to return a second message, the ONU replies the second message to the OLT. The second message carries first message reception result information. The OLT re-sends, according to the second message, all first messages whose reception failure is determined. According to this embodiment of the present invention, an OLT in an OFDM PON system transmits physical layer operation, administration and maintenance information to an ONU.

### Embodiment 10

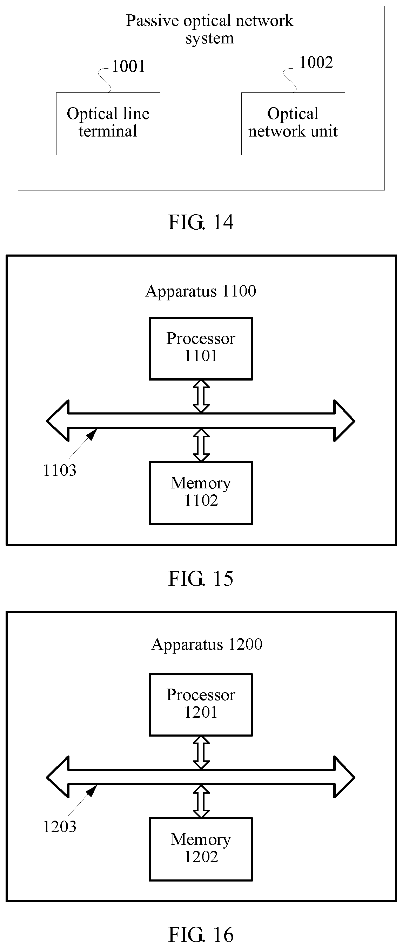

As shown in FIG. 14, the present invention further discloses a passive optical network system, including the optical line terminal 1001 and the optical network unit 1002. The optical line terminal 1001 obtains physical layer operation, administration and maintenance information between the optical line terminal and the optical network unit, and then fragments the physical layer operation, administration and maintenance information, to obtain multiple fragments. The optical line terminal 1001 generates a first message. The first message includes: a first message type identifier (Message type ID) field, used to identify a type of the first message; a message length (Length) field, used to identify a length of a fragment carried in the first message; an action indication field, used to identify whether the fragment carried in the first message is the last fragment; a first fragment sequence number (Fragment SeqNo) field, used to identify a sequence number of the fragment carried in the first message; and a message content (Message Content) field, used to carry a fragment in the multiple fragments. The optical line terminal 1001 sends the first message to the ONU.

On the other side, the ONU receives the first message. When the action indication field identifies that the fragment carried in the first message is the last fragment, the ONU searches the message length field, the message type identifier field, and the fragment sequence number field, and reassembles, according to a sequence of sequence numbers of fragments that are identified in the fragment sequence number field, first messages having same types identified in the message type identifier field, to obtain the physical layer operation, administration and maintenance information between the optical line terminal and the optical network unit.

If the first message requires to return a second message, the optical network unit 1002 replies the second message to the optical line terminal 1001. The second message includes at least: a first message reception result indication field, used to record whether each first message is successfully received or fails to be received. For a specific retransmission process, refer to the descriptions in the foregoing embodiment, and details are not described herein again.

In this embodiment of the present invention, the OLT fragments physical layer operation, administration and maintenance information, then generates first messages for fragments, and sends the first messages to the ONU. The ONU reassembles the fragments to obtain the physical layer operation, administration and maintenance information.

Further, in this embodiment of the present invention, a retransmission mechanism is set up. The ONU determines, according to the first message, whether the ONU is required to return a second message. When the first message requires the ONU to return a second message, the ONU replies the second message to the OLT. The second message carries first message reception result information. The OLT re-sends, according to the second message, all first messages whose reception failure is determined. According to this embodiment of the present invention, an OLT in an OFDM PON system transmits physical layer operation, administration and maintenance information to an ONU.

### Embodiment 11

As shown in FIG. 15, the present invention further discloses a data communication apparatus. The apparatus includes a processor 1101, a memory 1102, and a bus system 1103. The processor 1101 is connected to the memory 1102 by using the bus system 1103. The memory 1102 is configured to store an instruction. The processor 1101 is configured to execute the instruction stored in the memory 1102.

The processor 1101 is configured to: obtain physical layer operation, administration and maintenance information between an optical line terminal and an optical network unit; fragment the physical layer operation, administration and maintenance information, to obtain multiple fragments; generate a first message, where the first message includes: a first message type identifier field, used to identify a type of the first message; a message length field, used to identify a length of a fragment carried in the first message; an action indication field, used to identify whether the fragment carried in the first message is the last fragment; a first fragment sequence number field, used to identify a sequence number of the fragment carried in the first message; and a message content field, used to carry a fragment in the multiple fragments; and send the first message.

When the action indication field requests the optical network unit to return a second message, the processor 1101 is further configured to receive the second message. The second message includes: a first message reception result indication field, used to record whether each first message is successfully received or fails to be received.

The second message further includes: a first message statistics information field. The first message statistics information field includes: a successful first message quantity field and/or a failed first message quantity field. The successful first message quantity field is used to identify a quantity of successful first messages that is recorded in the first message reception result indication field; and the failed first message quantity field is used to identify a quantity of failed first messages that is recorded in the first message reception result indication field.

The processor 1101 is further configured to: search the successful first message quantity field, and if it is determined that a quantity of successful first messages reaches a value of the successful first message quantity field, re-send all the failed first messages in the first message reception result indication field, where all the failed first messages include: all first messages whose reception failure is determined and that are found and all remaining first messages that are not found; or
search the failed first message quantity field, and if it is determined that a quantity of failed first messages reaches a value of the failed first message quantity field, re-send all the first messages whose reception failure is determined in the first message reception result indication field.

In an embodiment, the second message further includes: a completion code field, used to identify a processing result of reception of the first message by the optical network unit. The processor 1101 is further configured to determine, according to a value of the completion code field, that at least one first message fails to be received.

Preferably, the first message further includes: a first sequence number field, used to identify a sequence number of the first message; a first optical network unit identifier field, used to identify an identifier of an optical network unit receiving the first message; and a first message integrity check code field, used to perform integrity check on the first message by the optical network unit.

In this embodiment of the present invention, an OLT fragments physical layer operation, administration and maintenance information, then generates first messages for fragments, and sends the first messages to an ONU. The ONU reassembles the fragments to obtain the physical layer operation, administration and maintenance information.

Further, in this embodiment of the present invention, a retransmission mechanism is set up. The ONU determines, according to the first message, whether the ONU is required to return a second message. When the first message requires the ONU to return a second message, the ONU replies the second message to the OLT. The second message carries first message reception result information. The OLT re-sends, according to the second message, all first messages whose reception failure is determined. According to this embodiment of the present invention, an OLT in an OFDM PON system transmits physical layer operation, administration and maintenance information to an ONU.

### Embodiment 12

As shown in FIG. 16, the present invention further discloses a data communication apparatus. The apparatus includes a processor 1201, a memory 1202, and a bus system 1203. The processor 1201 is connected to the memory 1202 by using the bus system 1203. The memory 1202 is configured to store an instruction. The processor 1201 is configured to execute the instruction stored in the memory 1202.

The processor 1201 is further configured to: receive a first message, where the first message includes: a first message type identifier field, used to identify a type of the first message; a message length field, used to identify a length of a fragment carried in the first message; an action indication field, used to identify whether the fragment carried in the first message is the last fragment; a first fragment sequence number field, used to identify a sequence number of the fragment carried in the first message; and a message content field, used to carry a fragment in multiple fragments, where the fragment in the multiple fragments is a fragment in the multiple fragments that are obtained after physical layer operation, administration and maintenance information between an optical line terminal and an optical network unit is fragmented; and
when the action indication field identifies that the fragment carried in the first message is the last fragment, search the message length field, the message type identifier field, and the fragment sequence number field, and reassemble, according to a sequence of sequence numbers of fragments that are identified in the fragment sequence number field, first messages having same types identified in the message type identifier field, to obtain the physical layer operation, administration and maintenance information between the optical line terminal and the optical network unit.

The processor 1201 is configured to send a second message. The second message includes: a first message reception result indication field, used to record whether each first message is successfully received or fails to be received.

The second message further includes: a first message statistics information field. The first message statistics information field includes: a successful first message quantity field and/or a failed first message quantity field. The successful first message quantity field is used to identify a quantity of successful first messages that is recorded in the first message reception result indication field; and the failed first message quantity field is used to identify a quantity of failed first messages that is recorded in the first message reception result indication field.

Further, the second message further includes: a completion code field, used to identify a processing result of reception of the first message by the optical network unit; a second fragment sequence number field, used to identify a sequence number that is replied by the second message and that is of the fragment carried in the first message; a second sequence number field, used to identify a sequence number of the second message; a second optical network unit identifier field, used to identify an identifier of an optical network unit sending the second message; and a second message integrity check code field, used to perform integrity check on the second message by the optical line terminal.

In this embodiment of the present invention, an OLT fragments physical layer operation, administration and maintenance information, then generates first messages for fragments, and sends the first messages to an ONU. The ONU reassembles the fragments to obtain the physical layer operation, administration and maintenance information.

Further, in this embodiment of the present invention, a retransmission mechanism is set up. The ONU determines, according to the first message, whether the ONU is required to return a second message. When the first message requires the ONU to return a second message, the ONU replies the second message to the OLT. The second message carries first message reception result information. The OLT re-sends, according to the second message, all first messages whose reception failure is determined. According to this embodiment of the present invention, an OLT in an OFDM PON system transmits physical layer operation, administration and maintenance information to an ONU.

In Embodiment 11 and Embodiment 12, specifically, for specific execution procedures of the processor 1101 and the processor 1201, refer to the descriptions corresponding to the flowcharts shown in FIG. 2, FIG. 4, FIG. 5, FIG. 6, FIG. 7, and FIG. 8, and details are not described herein.

It should be understood that in the embodiments of the present invention, the processor may be a central processing unit (Central Processing Unit, "CPU" for short), or the processor may be another general purpose processor, a digital signal processor (DSP), an application-specific integrated circuit (ASIC), a field programmable gate array (FPGA), or another programmable logic device, discrete gate or transistor logic device, discrete hardware component, or the like. The general-purpose processor may be a microprocessor, or the processor may further be any conventional processor, or the like.

The memory may include a read-only memory and a random access memory, and provide an instruction and data to the processor. A part of the memory may further include a non-volatile random access memory. For example, the memory may further store information of a device type.

The bus system may further include a power bus, a control bus, a status signal bus, and the like, in addition to a data bus. However, for clear description, various types of buses in the figure are marked as the bus system.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The computer software product is stored in a storage medium and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A message transmission method, comprising:
obtaining physical layer operation, administration and maintenance information between an optical line terminal and an optical network unit;
fragmenting the physical layer operation, administration and maintenance information, to obtain multiple fragments;
generating a first message, wherein the first message comprises: a first message type identifier field, used to identify a type of the first message; a message length field, used to identify a length of a fragment carried in the first message; an action indication field, used to identify whether the fragment carried in the first message is the last fragment; a first fragment sequence number field, used to identify a sequence number of the fragment carried in the first message; and a message content field, used to carry a fragment in the multiple fragments; and
sending the first message.

2. The method according to claim 1, wherein the action indication field is further used to identify whether to request the optical network unit to return a second message.

3. The method according to claim 2, further comprising:
when the action indication field requests the optical network unit to return a second message, receiving the second message, wherein the second message comprises: a first message reception result indication field, used to record whether each first message is successfully received or fails to be received.

4. The method according to claim 3, wherein the second message further comprises: a first message statistics information field, wherein the first message statistics information field comprises: a successful first message quantity field and/or a failed first message quantity field; the successful first message quantity field is used to identify a quantity of successful first messages that is recorded in the first message reception result indication field; and the failed first message quantity field is used to identify a quantity of failed first messages that is recorded in the first message reception result indication field; and
the method further comprises:
searching the successful first message quantity field, and if determining that a quantity of successful first messages reaches a value of the successful first message quantity field, re-sending all the failed first messages in the first message reception result indication field, wherein all the failed first messages comprise: all first messages whose reception failure is determined and that are found and all remaining first messages that are not found; or
searching the failed first message quantity field, and if determining that a quantity of failed first messages reaches a value of the failed first message quantity field, re-sending all the first messages whose reception failure is determined in the first message reception result indication field.

5. The method according to claim 3, wherein the second message further comprises: a completion code field, used to identify a processing result of reception of the first message by the optical network unit; and
the method further comprises:
determining, according to a value of the completion code field, that at least one first message fails to be received.

6. The method according to any one of claims 1 to 5, wherein the first message further comprises: a first sequence number field, used to identify a sequence number of the first message.

7. The method according to any one of claims 1 to 5, wherein the first message further comprises: a first optical network unit identifier field, used to identify an identifier of an optical network unit receiving the first message.

8. A message transmission method, comprising:
receiving a first message, wherein the first message comprises: a first message type identifier field, used to identify a type of the first message; a message length field, used to identify a length of a fragment carried in the first message; an action indication field, used to identify whether the fragment carried in the first message is the last fragment; a first fragment sequence number field, used to identify a sequence number of the fragment carried in the first message; and a message content field, used to carry a fragment in multiple fragments, wherein the fragment in the multiple fragments is a fragment in the multiple fragments that are obtained after physical layer operation, administration and maintenance information between an optical line terminal and an optical network unit is fragmented; and
when the action indication field identifies that the fragment carried in the first message is the last fragment, searching the message length field, the message type identifier field, and the fragment sequence number field, and reassembling, according to a sequence of sequence numbers of fragments that are identified in the fragment sequence number field, first messages having same types identified in the message type identifier field, to obtain the physical layer operation, administration and maintenance information between the optical line terminal and the optical network unit.

9. The method according to claim 8, wherein the action indication field of the first message is further used to identify whether to request the optical network unit to return a second message; and
the method further comprises:
when the action indication field of the received first message requests the optical network unit to return a second message, sending the second message, wherein the second message comprises: a first message reception result indication field, used to record whether each first message is successfully received or fails to be received.

10. The method according to claim 9, wherein the second message further comprises: a first message statistics information field, wherein the first message statistics information field comprises:
a successful first message quantity field and/or a failed first message quantity field; the successful first message quantity field is used to identify a quantity of successful first messages that is recorded in the first message reception result indication field; and the failed first message quantity field is used to identify a quantity of failed first messages that is recorded in the first message reception result indication field.

11. The method according to any one of claims 8 to 10, wherein the second message further comprises: a completion code field, used to identify a processing result of reception of the first message by the optical network unit.

12. The method according to any one of claims 8 to 10, wherein the second message further comprises: a second fragment sequence number field, used to identify a sequence number that is replied by the second message and that is of the fragment carried in the first message.

13. The method according to any one of claims 8 to 10, wherein the second message further comprises: a second sequence number field, used to identify a sequence number of the second message.

14. The method according to any one of claims 8 to 10, wherein the second message further comprises: a second optical network unit identifier field, used to identify an identifier of an optical network unit sending the second message.

15. An optical line terminal, comprising:
an obtaining unit, configured to obtain physical layer operation, administration and maintenance information between the optical line terminal and an optical network unit;
a fragmentation unit, configured to fragment the physical layer operation, administration and maintenance information, to obtain multiple fragments;
a generation unit, configured to generate a first message, wherein the first message comprises:
a first message type identifier field, used to identify a type of the first message; a message length field, used to identify a length of a fragment carried in the first message; an action indication field, used to identify whether the fragment carried in the first message is the last fragment; a first fragment sequence number field, used to identify a sequence number of the fragment carried in the first message; and a message content field, used to carry a fragment in the multiple fragments; and
a first sending unit, configured to send the first message.

16. The optical line terminal according to claim 15, wherein the action indication field is further used to identify whether to request the optical network unit to return a second message.

17. The optical line terminal according to claim 16, further comprising:
a receiving unit, configured to: when the action indication field requests the optical network unit to return a second message, receive the second message, wherein the second message comprises: a first message reception result indication field, used to record whether each first message is successfully received or fails to be received; and
a search unit, configured to: search, according to the first message reception result indication field, for a failed first message, and instruct the first sending unit to re-send the failed first message, wherein
the first sending unit re-sends the failed first message.

18. The optical line terminal according to claim 17, wherein the second message further comprises: a first message statistics information field, wherein the first message statistics information field comprises: a successful first message quantity field and/or a failed first message quantity field; the successful first message quantity field is used to identify a quantity of successful first messages that is recorded in the first message reception result indication field; and the failed first message quantity field is used to identify a quantity of failed first messages that is recorded in the first message reception result indication field;
the search unit is further configured to: search the successful first message quantity field, and if it is determined that a quantity of successful first messages reaches a value of the successful first message quantity field, instruct the first sending unit to re-send all the failed first messages in the first message reception result indication field, wherein all the failed first messages comprise: all first messages whose reception failure is determined and that are found and all remaining first messages that are not found; or search the failed first message quantity field, and if it is determined that a quantity of failed first messages reaches a value of the failed first message quantity field, instruct the first sending unit to re-send all the first messages whose reception failure is determined in the first message reception result indication field; and
the first sending unit is configured to re-send all the failed first messages in the first message reception result indication field.

19. The optical line terminal according to claim 17 or 18, wherein the second message further comprises: a completion code field, used to identify a processing result of reception of the first message by the optical network unit; and
the optical line terminal further comprises:
a determining unit, configured to determine, according to a value of the completion code field, that at least one first message fails to be received.

20. The optical line terminal according to any one of claims 15 to 19, wherein the first message further comprises: a first sequence number field, used to identify a sequence number of the first message.

21. The optical line terminal according to any one of claims 15 to 19, wherein the first message further comprises: a first optical network unit identifier field, used to identify an identifier of an optical network unit receiving the first message.

22. An optical network unit, comprising:
a second receiving unit, configured to receive a first message, wherein the first message comprises: a first message type identifier field, used to identify a type of the first message; a message length field, used to identify a length of a fragment carried in the first message; an action indication field, used to identify whether the fragment carried in the first message is the last fragment; a first fragment sequence number field, used to identify a sequence number of the fragment carried in the first message; and a message content field, used to carry a fragment in multiple fragments, wherein the fragment in the multiple fragments is a fragment in the multiple fragments that are obtained after physical layer operation, administration and maintenance information between an optical line terminal and the optical network unit is fragmented; and
a reassembly unit, configured to: when the action indication field identifies that the fragment carried in the first message is the last fragment, search the message length field, the message type identifier field, and the fragment sequence number field, and reassemble, according to a sequence of sequence numbers of fragments that are identified in the fragment sequence number field, first messages having same types identified in the message type identifier field, to obtain the physical layer operation, administration and maintenance information between the optical line terminal and the optical network unit.

23. The optical network unit according to claim 22, further comprising:
a second sending unit, configured to send a second message, wherein the second message comprises: a first message reception result indication field, used to record whether each first message is successfully received or fails to be received.

24. The optical network unit according to claim 23, wherein the second message further comprises: a first message statistics information field, wherein the first message statistics information field comprises: a successful first message quantity field and/or a failed first message quantity field; the successful first message quantity field is used to identify a quantity of successful first messages that is recorded in the first message reception result indication field; and the failed first message quantity field is used to identify a quantity of failed first messages that is recorded in the first message reception result indication field.

25. The optical network unit according to any one of claims 22 to 24, wherein the second message further comprises: a completion code field, used to identify a processing result of reception of the first message by the optical network unit.

26. The optical network unit according to any one of claims 22 to 24, wherein the second message further comprises: a second fragment sequence number field, used to identify a sequence number that is replied by the second message and that is of the fragment carried in the first message.

27. The optical network unit according to any one of claims 22 to 24, wherein the second message further comprises: a second sequence number field, used to identify a sequence number of the second message.

28. The optical network unit according to any one of claims 22 to 24, wherein the second message further comprises: a second optical network unit identifier field, used to identify an identifier of an optical network unit sending the second message.

29. A passive optical network system, comprising the optical line terminal according to any one of claims 15 to 21 and the optical network unit according to any one of claims 22 to 28.
